(19)

Europäisches
Patentamt
European
Patent Office
Office européen
des brevets

(11) **EP 1 433 133 B1**

(12) **EUROPEAN PATENT SPECIFICATION**

(45) Date of publication and mention
of the grant of the patent:
**14.02.2007 Bulletin 2007/07**

(21) Application number: **02769539.4**

(22) Date of filing: **16.05.2002**

(51) Int Cl.:
*G06T 3/00* (2006.01)

(86) International application number:
**PCT/IB2002/001703**

(87) International publication number:
**WO 2002/093478 (21.11.2002 Gazette 2002/47)**

(54) **A METHOD AND APPARATUS FOR EXECUTING AN AFFINE OR NON-AFFINE TRANSFORMATION**

VERFAHREN UND VORRICHTUNG ZUR AUSFÜHRUNG EINER AFFINEN ODER NICHT AFFINEN TRANSFORMATION

PROCEDE ET APPAREIL PERMETTANT D'EFFECTUER UNE TRANSFORMATION AFFINE OU NON AFFINE

(84) Designated Contracting States:
**AT BE CH CY DE DK ES FI FR GB GR IE IT LI LU MC NL PT SE TR**

(30) Priority: **17.05.2001 EP 01201874**

(43) Date of publication of application:
**30.06.2004 Bulletin 2004/27**

(73) Proprietor: **Koninklijke Philips Electronics N.V.**
**5621 BA Eindhoven (NL)**

(72) Inventor: **MEINDS, Kornelis**
**NL-5656 AA Eindhoven (NL)**

(74) Representative: **Damen, Daniel Martijn et al**
**Philips Intellectual Property & Standards**
**P.O. Box 220**
**5600 AE Eindhoven (NL)**

(56) References cited:
**EP-A- 0 604 772         US-A- 5 559 905**

**Description**

BACKGROUND OF THE INVENTION

The invention relates to a method as recited in the preamble of Claim 1.

Such an apparatus is known from US 5 559 905. This publication describes an apparatus for resizing an image, comprising interpolation filter means for receiving a stream of input pixels having a predetermined sample period P and a first sampling rate and interpolating the stream of pixels at a predetermined interpolation rate for generating a first derived sample stream of pixels having a further sampling period and a second sampling rate.

A prime field of application of such transforms is the magnification or minification of digital images, such as black and white or color photographs. The scaling factors involved need not be uniform among the various coordinates and they furthermore may also be non-uniform over the image. In particular, magnification in one part or dimension of the input sample sequence may be combined with minification in another part or direction of the input sample sequence. A typical example of application would be to display an image in a perspective view. The invention is likewise applicable for other numbers of coordinates than two and for other fields of use, such as the compression of sound. Another name for such process is sample-rate conversion. As will be shown hereinafter, such process will in many instances produce "ripples" in the values associated to the resulting samples that lower the eventual quality.

Relevant technology has been disclosed in US Patent 5,892,695 to Van Dalfsen et al. Particular applications of this technology are texture mapping in a 3D graphics pipeline and the use of a warping function with an image morph technique. This method uses a higher order prefilter to suppress high frequencies when the output signal is minified and warped. The prior art has been successful in various fields.

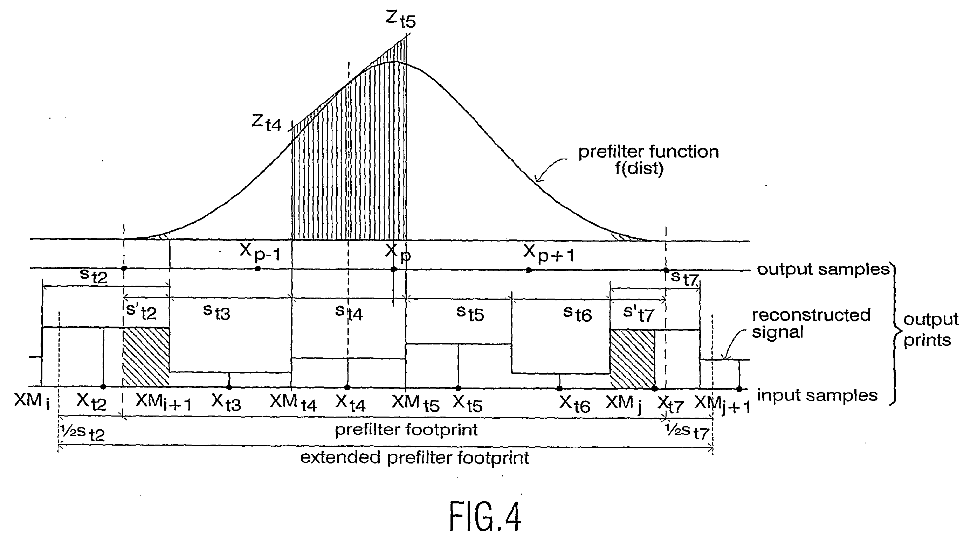

The present inventor has however recognized that in particular for minification factors close to one, the prior art would still perform less than optimum and would justify further improvement. In particular, when appreciating the teachings of Figure 4 hereinafter, this insight bases on the difference between the area of the trapezoid that lies below the line $Zt_4$-$Zt_5$, and the area that lies below the corresponding part of the prefilter function. In fact, the discrepancy is caused by the digital character of the filter characteristic as only approximating an ideal transfer function.

SUMMARY TO THE INVENTION

In consequence, amongst other things, it is an object of the present invention to mitigate problems that stem from the digitization as recited supra, to allow a better mapping of the input sample sequence on the output sample sequence.

The invention is defined by the appended claims.

Now therefore, according to one of its aspects the invention is characterized according to the characterizing part of Claim 1. The inventor has recognized that the procedure of the invention allows to avoid the so-called DC-ripple or sample-frequency ripple, in particular so for minification factors that would be variable and furthermore, not far from a value of 1. In particular, the invention allows the use of arbitrary and continuously variable minification factors. The invention effectively bases on storing a definite integral of the normal filter or weight function instead of storing the function itself.

The invention also relates to an apparatus being arranged for implementing a method as claimed in Claim 1. Further advantageous aspects of the invention are recited in dependent Claims.

BRIEF DESCRIPTION OF THE DRAWING

These and further aspects and advantages of the invention will be discussed more in detail hereinafter with reference to the disclosure of preferred embodiments, and in particular with reference to the appended Figures that show:

Figures 1a-1c, a comparison of the present invention with prior art regarding DC ripples;
Figures 1d-1f, impressions of the influence of the DC ripple with the prior art method;
Figure 2, the principle of calculating a complete discrete convolution in direct form;
Figure 3, the principle of calculating a partial discrete convolution in transposed form;
Figure 4, the principle of a box-reconstructed signal for convolution with the prefilter;
Figure 5, a transposed polyphase structure with the primitive of the filter function;
Figure 6, a direct-form structure;
Figure 7, another transposed polyphase structure with the filter function primitive;
Figure 8, a revised direct structure based on the foregoing;

GENERAL DISCUSSION OF THE INVENTION'S OPERABILITY

To avoid the production of DC-ripple, the weighting factors of all input samples that will contribute to a single output sample must add to exactly 1. These effectively are the input samples falling within the filter's footprint, including those that just fall outside. The present invention, in particular as represented by equation (9) hereinafter, fulfills this requirement. Consider the part to the right of the third "=" symbol. Herein, the weight factor of an input sample is the part in front of $C_t$, to with (for a definition of $XM_t$ see below):

$$F(XM_{t+1} - X_p) - F(XM_t - X_p)$$

Summing the weight factors will *exactly* produce the area below the filter function. These filter functions have been designed in such manner that the area below the filter profile is "one", if the intensity of the output image must be the same as that of the input image. Consider Figure 4 for an intuitive explanation. One weight factor

$$F(XM_{t+1} - X_p) - F(XM_t - X_p)$$

corresponds to the area above a constant fraction of the reconstructed signal, cf. the light gray hatched part. Thereby, the sum of all these weighting factors will exactly equal 1. In traditional FIR methods that are based on equation (2) hereinafter, it can be recognized that the summation of the weights will sum only "approximately" to 1, but not necessarily exactly. Again, the weighting factor of an input sample is the part before $C_t$ (now in Eq. 2, however), to wit: $f(X_t - X_p)$. $S_t$. Intuitively, this will go as follows: In Figure 4, the weight $f(X_t - X_p) \cdot S_t$ corresponds to the area of a rectangle, which for clarity has not been drawn, however. The area of the rectangle may be considered as an approximation for the exact area shown supra. The area of the rectangle is equal to the area below the trapezoid bounded by $Zt_4$-$Zt_5$. It is clear that this is not equal to the area below the filter function. The summing of all those approximations is about equal to 1, but will fluctuate around 1, dependent on the shifting of the input samples with respect to the filter profile. This fluctuation in the summation of weighting factors causes intensity fluctuations in the output image, even when all input samples have constant values. This is effectively the DC-ripple.

DETAILED DESCRIPTION OF PREFERRED EMBODIMENTS

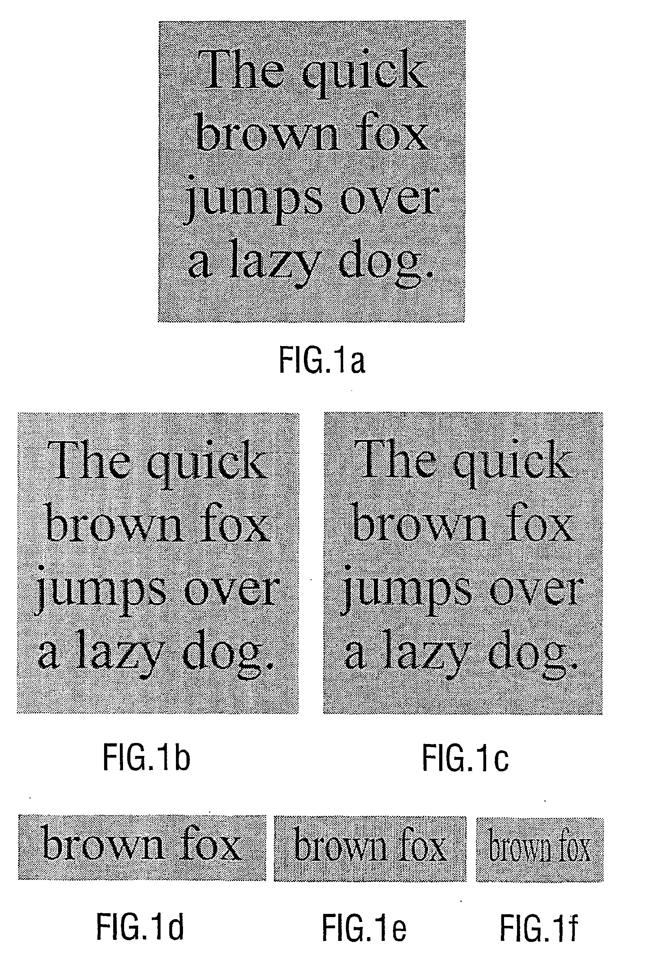

Figures 1a-1c illustrate a comparison of the present invention with the cited prior art regarding DC ripples. Figure 1a has the original image. In Figure 1b, the image has been minified horizontally by a factor 1.11, corresponding to a scaling factor of 0.9, whilst retaining the original vertical size. Horizontal ripples called DC- or sample frequency ripples are prominent. In Figure 1c, the method according to the invention has been used. No ripples are visible anymore.
Figures 1d-1f give further impressions of the influence of the DC ripple with the prior art method, for uniform horizontal minification factors of 1.066, 1.5, and 2, corresponding to scaling factors of 0.94, 0,75, and 0.5, respectively. For low minification factors i.e. close to 1, the period of the ripple gets longer, while its amplitude grows, and therefor, its visibility increases. Above a minification factor of 2, DC ripple will virtually vanish. For non-uniform scaling factors, such as in perspective transformation, the pattern of the DC-ripple will become irregular as well, and may resemble a Moiré pattern. Also the latter DC ripple patterns will be avoided by the present invention. Prior art methods will find little problems in upscaling. However, prior art only allows downscaling with a sufficient degree of DC-ripple suppression in particular value regions for the downscaling factor.
Hereinafter, the following relevant variables are listed:

X        the coordinate value in the output space
S        the approximated local scaling factor, according to dm(u)/du, wherein m(u) is the mapping function, e.g., through a perspective transformation. Now, dm(u)/du is the exact local scaling value for a sample t on input coordinate $U_t$ = u with mapped coordinate ($X_t$ = m(u)). The implementations hereinafter use a straightforward approximation for dm(u)/du, in particular, with: $S_t = (X_{t+1} - X_{t-1}) / 2$, with $X_t = m(u)$.
C        the input sample value
f        a prefilter function
$UM_t$     the midpoint coordinate of the input samples such as $U_t$
$XM_t$     the mapping result of $m(UM_t)$.

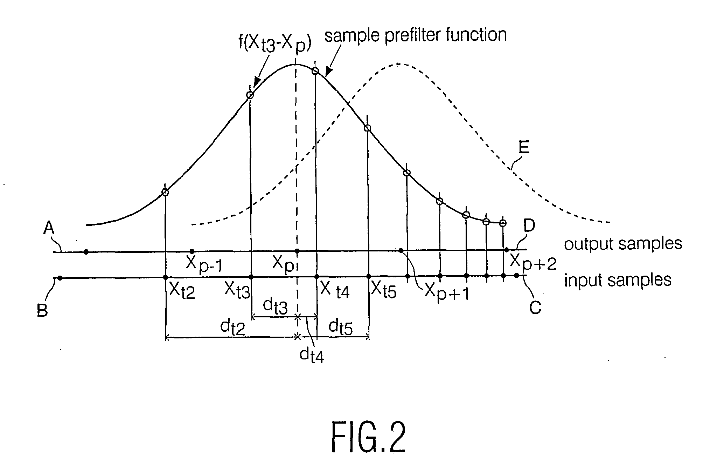

Figure 2 illustrates the principle of calculating a complete discrete convolution, using the direct form: herein, a particular output sample is calculated from the contributions of all relevant input samples; the algorithm is said to be output driven. Each output sample is processed only once. For simplicity, a single amplitude is calculated for output sample $X_p$, thus corresponding to a black-and-white image. In the example, the output sample is shown at the peak (A) of the filter curve (B). For the filter footprint of 4 chosen in this case, all input samples below the filter curve and just outside will contribute. Note the non-uniformity of the input sample distribution on axis C when transformed to the output sample distribution on axis D. Note that both axis relate to the output space.

The above applies to a direct-form structure that operates output-driven. This procedure has proven well-suited for magnification calculations inasmuch there exists no upper boundary for the magnification factor. For minification calculations however, there exists a region for the minification factor, where the DC-ripple artefacts will severely diminish the usefulness of the resulting image.

Another disadvantage of using the direct-form structure for minification is that each filter tap needs a filter coefficient out of a separately indexed filter function (such as specified by a table). (This is illustrated with Figure 8). In Figure 2, curve E would apply to calculating the next output sample.

Now, a particular procedure according to the invention is to use transposed structures for calculating the output samples, through as it were extracting all contributions from the various input samples to a particular output sample, and thereafter stepping to the calculation of the next output sample, without once reverting to an earlier output sample. The usage of an integral form or primitive of the input filter characteristic will eliminate the generation of DC-ripple, independent of the value of the minification factor. The selecting between the direct form and the transposed form will sometimes be just a matter of choice, whereas in other cases one of the two should be chosen either in terms of hardware, or in terms of signal delay, or even on the basis of other arguments.

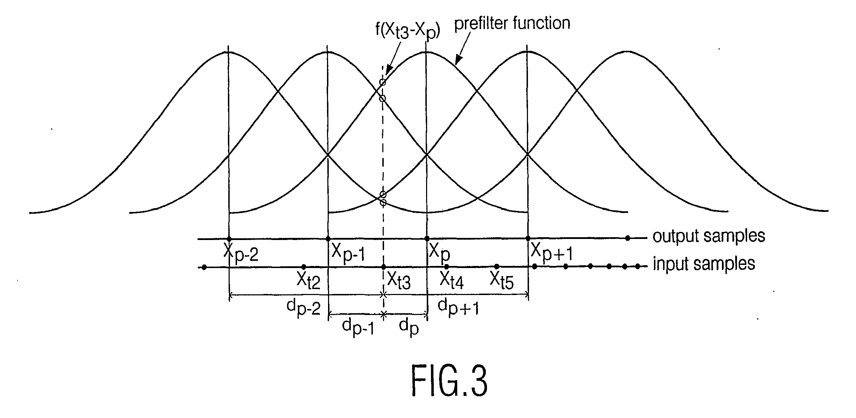

Figure 3, illustrates the principle of calculating a partial discrete convolution; this is used in the transposed structure. Herein, the contributions from a particular input sample are calculated for all relevant output samples; the structure is called input driven. If all input samples relevant for a particular output sample have been taken in to account, the relevant output sample has been finished. When processing in the embodiment in question from left to right, during the accounting of input sample $X_{t4}$, output sample $X_{p-2}$ will just have been completed. This procedure is well suited for minification calculations. However, calculation time and/or necessary hardware will increase for larger minification factors.

The principle of resampling is according to the following four steps: first, a continuous signal is formed from the input samples; next, the continuous signal is transformed through scaling or warping; third, the transformed continuous signal is subjected to prefiltering to suppress high frequency constituents that may not be properly represented by the output grid; finally, resample the continuous result on the output grid points. Now, the procedure illustrated in this Figure will lend itself in a particularly advantageous manner for use with a continuously variable scaling factor, so that the implementation would be extremely straightforward.

Figure 4 illustrates the principle of a box-reconstructed signal for convolution with the prefilter. In particular, this illustrates the convolution of a box-reconstructed signal mapped into the output space with a prefilter. The Figure undertakes to illustrate the generating of a DC-ripple error for a particular sample. In this context, the resample formula of an output sample is represented by Equation (1), hereinafter, that by itself constitutes prior art.

FIR filters will have a finite width. The approximated expression thereof is given by Eq. (2) hereinafter. Practically, only the pixels covered by the footprint itself will be included. This limitation is the first, although minor cause of DC ripple. A second, more important, cause is however that Eq. (2) will produce an error with respect to the exact convolution equation (1) that should be calculated. This error causes DC-ripple, which are spatial intensity fluctuations in the output image.

In Figure 4, the weight factor corresponding to the trapezoid that lies below $Z_{t4}$-$Z_{t5}$ is replaced by the corresponding area below the integrated filtering curve itself. The effect thereof is that irrespective of the shift between the output sample and the input sample set, the overall summed weight factor will always be equal to a uniform value, usually 1.

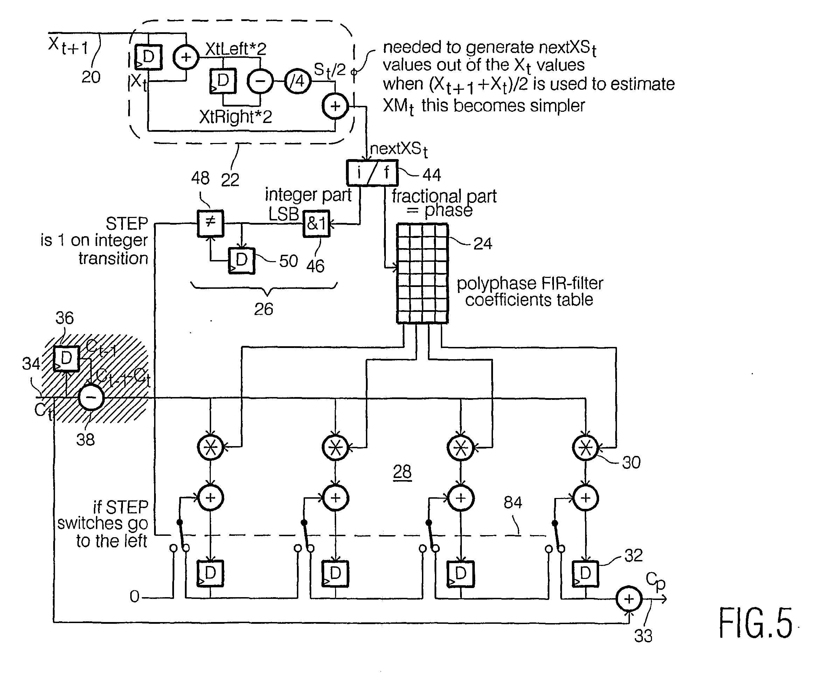

Figure 5 illustrates a first transposed polyphase structure with the filter function primitive stored in a Table 24. The input values $X_{t+1}$ (20) are processed in block 22 that generates the **next $XS_t$** value which estimates $XM_t$ from the $XT_h$, $X_t$ and $X_{t-1}$ values. When $(X_{t+1} + X_t)/2$ is used to estimate $XM_t$, this becomes simpler. As shown, the subsystem comprises latches indicated D, adders indicated +, and a subtractor indicated -, for outputting the value next $XS_t$. Device 44 splits the integer i and fractional f parts of the value received. The integer part is transmitted to item 46, that grabs bit number 0 of the integer part of Next $XS_t$. Furthermore, the least significant bit of the result LSB is stored in latch 50. EXOR 48 outputs a "1" for thereby controlling a STEP on multiple switches 84. This setup applies in particular to minification.

Furthermore, input 34 receives Ct, which is stored in latch 36, so that subtractor 38 can produce a differential between successive Ct values. These various differentials will be multiplied in multipliers 30 by the appropriate values read from integral filter function table 24. The results will in depence of the switch control from latch 48, either be stored in latches 32 after adding to the pre-existent values stored in those latches, or rather, after adding of the pre-existent values in the next latches to the left. At the final output of the device, adding of Ct will yield the value Cp required.

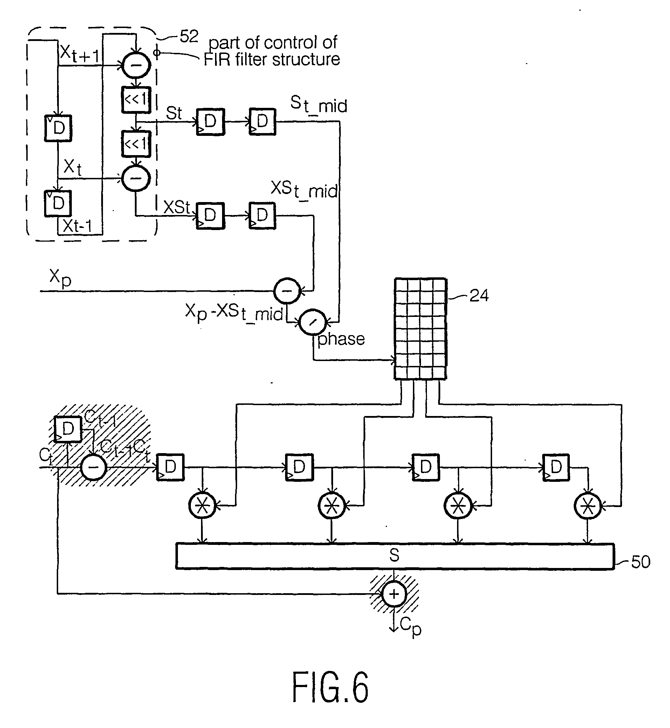

In similar manner, Figure 6 illustrates a direct-form structure, that is suited in particular for magnification, and which is the transposed form of Figure 5. The lower part of the Figure largely corresponds to that of Figure 5, but the additions are executed in parallel in block 50 for eventually producing Cp. In correspondence therewith, the top part of the Figure has block 52, that is part of the control of the FIR filter structure. As shown, the input signal $X_{t+1}$ is delayed over two sample periods, and subjected to subtraction. The blocks indicated by "<<" are in fact shifters (*2, *4, etc.) over as many bit positions as the numeral value shown. The results are combined with $X_p$ through subtraction and division, for so again correctly addressing the integral filter function table 24. $XS_t$ is an estimation for $XM_t$. It is also possible to use a coarser estimation for $XM_t$ (e.g. $(X_{th} + X_t)/2$) that requires less hardware.

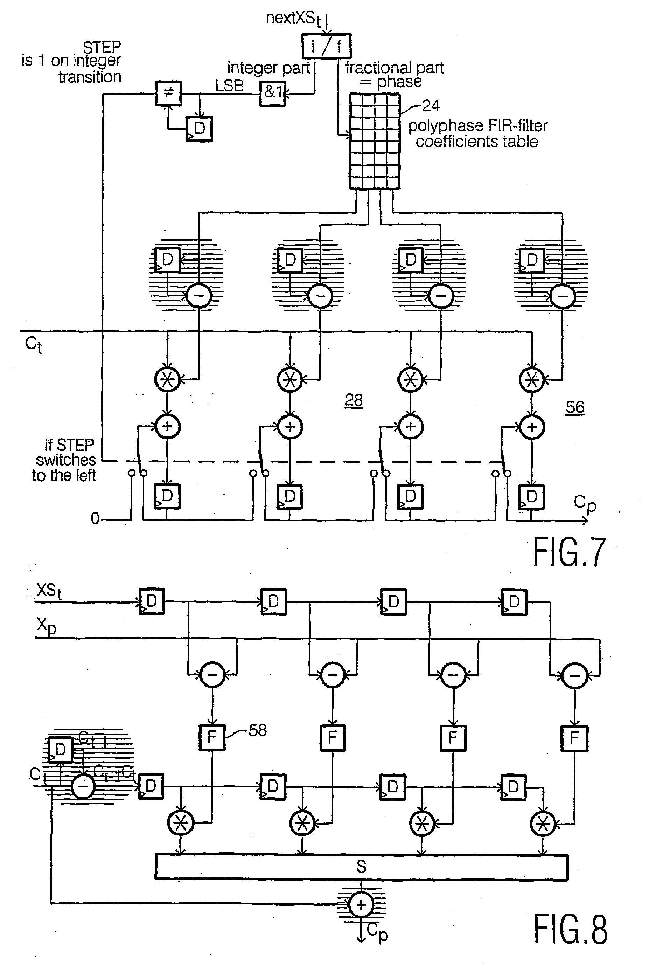

Figure 7 illustrates a second transposed polyphase structure with the filter function primitive. The lower part 28 corresponds nearly exactly with that of Figure 5 and warrants no further discussion. In this case however, signal $C_t$ is input immediately. In contradistinction to the foregoing, the polyphase integral filter function table is followed by a set of latches cum subtractors as a counterpart to the elements 36, 38 in Figure 5. The further elements at the top of the Figure again correspond one-to-one to those of Figure 5 to receive the signal next $XS_t$. This transposed approach applies in particular to minification.

Figure 8 illustrates a revised direct structure based on the foregoing. Here, the primitive filter function is used as being stored in a single table which is being indexed multiple times, to wit once per filter tap. The lower part of the Figure again broadly corresponds to that of Figure 6. Item 58 represent the various full or partial tables. The differences between $X_p$ and successive elements of $XS_t$ will control the actual accessing. In fact, Figure 8 represents a closer approximation of the theoretical resample formula than Figure 6. The closer approximation is attained by taking into account that samples within the filter footprint that have a greater value of $S_t$ will contribute more, abstracted from the transformation factor produced by the filter amplitude, than corresponding samples that have a smaller value for $S_t$. This direct-form implementation is in particular applicable to minification, but is a bit less suited for larger minification factors.

Equations used in the foregoing:

$$C_p = {}_{-\infty}\int^{+\infty} f\,(\,X_t - X_p\,)\,.\,\mathrm{rec_{box}}\,(\,X_t C_t\,)\,dt \qquad (1)$$

$$C_p = \Sigma\,f\,(\,X_t - X_p)\,.\,S_t\,.\,C_t. \qquad (2)$$

$$C_p = \int f\,(\,X_t - X_p)\,.\,\mathrm{rec_{box}}\,(X_t\,.\,C_{t)}\,dt = \Sigma\,[\,{}_{XM_t}\int^{XM_{t+1}}.\,f\,(\,X_t - X_p)\,.dt\,C_{t)} = $$

$$C_p = \Sigma\,_{\forall t}\,(\,(\,F(\,XM_{t+1} - X_p\,) - F\,(\,XM_t - X_p\,))\,.\,C_t\,), \qquad (9)$$

wherein F is a primitive of f: dF (x) / dx = f(x)

The above implementations and embodiments have been recognized by the inventors as being particular effective in terms of various quality-determining parameter values. The scope of the invention is defined by the scope of the appended claims. The embodiments supra should be construed as being illustrative and nonlimiting viz-à-viz such Claims.

**Claims**

1. An automated method of executing an affine or non-affine sample rate conversion transformation from an input array sequence of first sampled physical signal values (Ct) to an output array sequence of second sampled signal values (Cp) through, for each transformed second sampled signal value (Cp), summing the values of a finite set of products, each product being computed as a respective first sampled signal value (Ct) times a corresponding weight factor given by the corresponding value of a filter transform function,
   **characterized in that** a primitive function F of a continuous filter function f is computed, said filter function defining the shape of the desired filter characteristic for filtering during said sample rate conversion; and **in that** said filter transform function values are computed based on samples from said filter shape integral F.

**2.** A method as claimed in Claim 1, wherein said filter is a prefilter or a reconstruction filter.

**3.** A method as claimed in Claim 1, wherein each respective first sampled signal (Ct) is immediately mapped onto the various second sampled signals (Cp), followed by a stepping to a next first sampled signal ($C_{t+1}$), until all first sampled signals have been considered, followed by outputting said second output samples for representation.

**4.** A method as claimed in Claim 1, wherein a respective first sampled signal (Ct) is immediately mapped on a particular second sampled signal (Cp), followed by stepping to a next first sampled signal ($C_{t+1}$), until all first sampled signals have been considered for the second sampled signal (Cp) in question, followed by stepping to the next second sampled signal ($C_{p+1}$), until all second sampled signals have been considered, and followed by outputting said second output samples for representation.

**5.** A method as claimed in Claim 1, for use during sample rate conversion under execution of a minification mapping procedure, through accumulating product values of a filter transform function and an associated input (Ct), wherein each filter transform function value is obtained by subtracting two samples of the primitive of the filter function f, said samples being associated to respective distances between output sample coordinates (Xp) and mid-points (XM) between input sample coordinates.

**6.** A method as claimed in Claim 1, wherein said input array and output array are mapped onto each other in a spatially non-uniform manner.

**7.** A method as claimed in Claim 1, using a universal filter profile f.

**8.** A method as claimed in Claim 1, and used in particular for minification or magnification.

**9.** A method as claimed in Claim 3, wherein said sampling rate conversion implements an unrestricted minification factor.

**10.** A method as claimed in Claim 4, wherein said sampling rate conversion implements an unrestricted magnification factor.

**11.** A method as claimed in Claim 1, wherein said transformation is two- or more dimensional.

**12.** A method as claimed in Claim 1, implementing a continuously variable scaling factor between said input array and said output array.

**13.** A method as claimed in Claim 1, implementing scaling with a scaling factor that is continuously variable.

**14.** An apparatus adapted to implement the method of claim 1, said apparatus having receiving means (34) for receiving the input array sequence (Ct), storage means (24) for storing the filter transform function and computing the filter transform function according to the filter shape integral F, and accumulator means (28) for summing the fmite set of products with respect to each transformed second sampled signal (Cp).

**Patentansprüche**

**1.** Automatisches Verfahren zum Durchführen einer affinen oder nicht affinen Abtastratenumsetzungstransformation von einer Eingangssequenz erster abgetasteter physikalischer Signalwerte (Ct) in eine Ausgangssequenz zweiter abgetasteter Signalwerte (Cp) durch, für jeden transformierten zweiten abgetasteten Signalwert (Cp), Summierung der Werte eines endlichen Satzes von Produkten, wobei jedes Produkt als ein betreffender erster abgetasteter Signalwert (Ct) mal einem entsprechenden Gewichtungsfaktor, gegeben durch den entsprechenden Wert einer Filtertransformationsfunktion berechnet wird, **dadurch gekennzeichnet, dass** eine primitive Funktion F einer kontinuierlichen Filterfunktion f berechnet wird, wobei die genannte Filterfunktion die Form der gewünschten Filtercharakteristik zur Filterung während der genannten Abtastratenumsetzung definiert; und dass die genannten Filtertransformationsfunktionswerte auf Basis der Abtastwerte von dem genannten Filterformintegral F berechnet werden.

**2.** Verfahren nach Anspruch 1, wobei das genannte Filter ein Vorfilter oder ein Rekonstruktionsfilter ist.

**3.** Verfahren nach Anspruch 1, wobei jedes betreffende erste abgetastete Signal (Ct) unmittelbar auf den jeweiligen zweiten abgetasteten Signalen (Cp) abgebildet wird, wonach ein SDchritt zu einem nächsten ersten abgetasteten Signal ($C_{t+1}$) folgt, bis alle ersten abgetasteten Signale betrachtet worden sind, wonach die Ausgabe der genannten zweiten Ausgangsabtastwerte zur Darstellung folgt.

4.  Verfahren nach Anspruch 1, wobei ein betreffendes erstes abgetastetes Signal (Ct) unmittelbar auf einem bestimmten zweiten abgetasteten Signal (Cp) abgebildet wird, wonach ein Schritt zu einem nächsten ersten abgetasteten Signal ($C_{t+1}$) folgt, bis alle ersten abgetasteten Signal für das betreffende zweite abgetastete Signal (Cp) betrachtet worden sind, wonach ein Schritt zu dem nächsten zweiten abgetasteten Signal ($C_{p+1}$) folgt, bis alle zweiten abgetasteten Signale betrachtet worden sind, und wonach die Ausgabe der genannten zweiten Ausgangsabtastwerte zur Darstellung folgt.

5.  Verfahren nach Anspruch 1, zur Anwendung während der Abtastratenumsetzung unter Durchführung einer Minifikation der Abbildungsprozedur, durch Akkumulation von Produktwerten einer Filtertransformationsfunktion und einer assoziierten Eingabe (Ct), wobei jeder Filtertransformationsfunktionswert durch Subtraktion zweier Abtastwerte der Primitiven der Filterfunktion f erhalten wird, wobei die genannten Abtastwerte mit betreffenden Abständen zwischen Ausgangsabtastwertkoordinaten (Xp) und Mittelpunkten (XM) zwischen Eingangsabtastwertkoordinaten assoziiert sind.

6.  Verfahren nach Anspruch 1, wobei die genannte Eingangsreihe und Ausgangsreihe auf eine räumlich nicht einheitliche Art und Weise auf einander abgebildet werden.

7.  Verfahren nach Anspruch 1, wobei ein universales Filterprofil f angewandt wird.

8.  Verfahren nach Anspruch 1 und angewandt insbesondere zur Verkleinerung oder Vergrößerung.

9.  Verfahren nach Anspruch 3, wobei die genannte Abtastratenumsetzung einen unbegrenzten Vergrößerungsfaktor realisiert.

10. Verfahren nach Anspruch 4, wobei die genannte Abtastratenumsetzung einen unbegrenzten Vergrößerungsfaktor implementiert.

11. Verfahren nach Anspruch 1, wobei die genannte Transformation zwei- oder mehrdimensional ist.

12. Verfahren nach Anspruch 1, wobei ein kontinuierlich variabler Skalierungsfaktor zwischen der genannten Eingangsreihe und der genannten Ausgangsreihe implementiert wird.

13. Verfahren nach Anspruch 1, wobei die Skalierung mit einem Skalierungsfaktor implementiert wird, der kontinuierlich variabel ist.

14. Anordnung, vorgesehen zum Implementieren des Verfahrens nach Anspruch 1, wobei die genannte Anordnung Empfangsmittel (34) aufweist zum Empfangen der Eingangssequenz (Ct), Speichermittel (24) zum Speichern der Filtertransformationsfunktion und zum Berechnen der Filtertransformationsfunktion entsprechend dem Filterformintegral F, und Akkumulatormittel (28) zum Summieren des endlichen Satzes von Produkten in Bezug auf jedes transformierte zweite abgetastete Signals (Cp).

## Revendications

1.  Procédé automatisé d'exécution d'une transformation de conversion de fréquence d'échantillonnage affine ou non affine à partir d'une séquence-tableau d'entrée de premières valeurs de signal physique échantillonnées (Ct) vers une séquence-tableau de sortie de secondes valeurs de signal échantillonnées ($C_p$) par l'intermédiaire, pour chaque seconde valeur de signal échantillonnée transformée ($C_p$), de la sommation des valeurs d'un ensemble fini de produits, chaque produit étant calculé comme une première valeur de signal échantillonnée respective (Ct) multipliée par un facteur de pondération correspondant donné par la valeur correspondante d'une fonction de transformation de filtre,
    **caractérisé en ce qu'**une fonction primitive F d'une fonction de filtre continue f est calculée, ladite fonction de filtre définissant la forme de la caractéristique de filtre souhaitée pour filtrer pendant ladite conversion de fréquence d'échantillonnage; et **en ce que** lesdites valeurs de fonction de transformation de filtre sont calculées sur base d'échantillons provenant de ladite intégrale de forme de filtre F.

2. Procédé selon la revendication 1, dans lequel ledit filtre est un préfiltre ou un filtre de reconstitution.

3. Procédé selon la revendication 1, dans lequel chaque premier signal échantillonné respectif ($C_t$) est immédiatement plaqué sur les différents seconds signaux échantillonnés (Cp), après quoi l'on passe à un premier signal échantillonné suivant ($C_{t+1}$), jusqu'à ce que tous les premiers signaux échantillonnés aient été pris en compte, après quoi sont délivrés lesdits seconds échantillons de sortie pour représentation.

4. Procédé selon la revendication 1, dans lequel un premier signal échantillonné respectif ($C_t$) est immédiatement plaqué sur un second signal échantillonné particulier ($C_p$), après quoi l'on passe à un premier signal échantillonné suivant ($C_{t+1}$), jusqu'à ce que tous les premiers signaux échantillonnés aient été pris en compte pour le second signal échantillonné (Cp) en question, après quoi l'on passe au second signal échantillonné suivant ($C_{p+1}$), jusqu'à ce que tous les seconds signaux échantillonnés aient été pris en compte, après quoi sont délivrés lesdits seconds échantillons de sortie pour représentation.

5. Procédé selon la revendication 1, destiné à être utilisé pendant une conversion de fréquence d'échantillonnage au cours de l'exécution d'une procédure de placage de réduction, en cumulant des valeurs de produit d'une fonction de transformation de filtre et d'une entrée associée ($C_t$), où chaque valeur de fonction de transformation de filtre est obtenue en soustrayant deux échantillons de la primitive de la fonction de filtre f, lesdits échantillons étant associés aux distances respectives entre les coordonnées d'échantillon de sortie ($X_p$) et les points médians (XM) entre les coordonnées d'échantillon d'entrée.

6. Procédé selon la revendication 1, dans lequel lesdites table d'entrée et table de sortie sont plaquées l'une sur l'autre d'une manière spatialement non uniforme.

7. Procédé selon la revendication 1, utilisant un profil de filtre universel f.

8. Procédé selon la revendication 1, et utilisé en particulier pour une réduction ou un agrandissement.

9. Procédé selon la revendication 3, dans lequel ladite conversion de fréquence d'échantillonnage implémente un facteur de réduction non restreint.

10. Procédé selon la revendication 4, dans lequel ladite conversion de fréquence d'échantillonnage implémente un facteur d'agrandissement non restreint.

11. Procédé selon la revendication 1, dans lequel ladite transformation est à deux ou plusieurs dimensions.

12. Procédé selon la revendication 1, implémentant entre ladite table d'entrée et ladite table de sortie un facteur d'échelle variant de manière continue.

13. Procédé selon la revendication 1, implémentant un changement d'échelle avec un facteur d'échelle qui varie de manière continue.

14. Appareil adapté pour implémenter le procédé selon la revendication 1, ledit appareil possédant des moyens de réception (34) pour recevoir la séquence-tableau d'entrée ($C_t$), des moyens de mémorisation (24) pour mémoriser la fonction de transformation de filtre et pour calculer la fonction de transformation de filtre selon l'intégrale de forme de filtre F, ainsi que des moyens d'accumulation (28) pour additionner l'ensemble fini de produits concernant chaque second signal échantillonné transformé ($C_p$).

FIG.1a

FIG.1b

FIG.1c

FIG.1d

FIG.1e

FIG.1f

FIG.2

FIG.3

FIG.4

FIG.5

FIG.6

FIG.7

FIG.8

15